(19) Europäisches Patentamt
European Patent Office
Office européen des brevets

(11) EP 2 214 821 B1

(12) **EUROPEAN PATENT SPECIFICATION**

(45) Date of publication and mention
of the grant of the patent:
**19.06.2013 Bulletin 2013/25**

(51) Int Cl.:
***B01J 35/08*** (2006.01)      ***C08F 4/651*** (2006.01)
***C08F 210/06*** (2006.01)      ***B01J 37/02*** (2006.01)
***C08F 210/16*** (2006.01)

(21) Application number: **08853406.0**

(22) Date of filing: **26.11.2008**

(86) International application number:
**PCT/EP2008/066267**

(87) International publication number:
**WO 2009/068579 (04.06.2009 Gazette 2009/23)**

(54) **PROCESS FOR THE PREPARATION OF PROPYLENE RANDOM COPOLYMERS**

VERFAHREN ZUR HERSTELLUNG VON RANDOM-PROPYLENCOPOLYMEREN

PROCÉDÉ DE PRÉPARATION DE COPOLYMÈRES ALÉATOIRES DE PROPYLÈNE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **30.11.2007 EP 07122051**

(43) Date of publication of application:
**11.08.2010 Bulletin 2010/32**

(73) Proprietor: **Borealis Technology OY
06101 Porvoo (FI)**

(72) Inventors:
• **DENIFL, Peter
FIN-00990 Helsinki (FI)**
• **LEINONEN, Timo
FIN-06750 Tolkkinen (FI)**
• **HAIKARAINEN, Anssi
FIN-04300 Tuusula (FI)**
• **VESTBERG, Torvald
FIN-06100 Porvoo (FI)**

(74) Representative: **Lux, Berthold
Maiwald Patentanwalts GmbH
Elisenhof
Elisenstraße 3
80335 München (DE)**

(56) References cited:
**EP-A- 0 887 380      EP-A- 1 598 377
EP-A- 1 803 743      WO-A-03/000754**

**Description**

The present invention relates to a process for the preparation of propylene random copolymers.

Propylene homopolymers have high resistance to heat and chemicals as well as beneficial mechanical properties. However, other properties of propylene homopolymers such as impact strength, in particular at low temperature, flexibility, clarity or haze need to be improved for specific applications.

It is known that mechanical properties such as impact strength or optical properties can be improved by copolymerising propylene with ethylene or other $\alpha$-olefins. If these comonomers are randomly distributed within the polymeric chain, a propylene random copolymer is obtained. Propylene random copolymers are inter alia used in blow moulding, injection moulding, and film extrusion applications for the preparation of materials such as food packaging, medical packaging, and consumer products.

For specific applications, a high amount of comonomers needs to be incorporated into the polypropylene, e.g. to provide a material having a sufficiently high impact strength. However, the higher the comonomer content, the higher is the risk that these comonomers build separate building blocks, thereby lowering randomness of the resultant polymer.

A further problem which arises when increasing comonomer content is the stickiness of the polymer particles. Due to the stickiness the polymer particles agglomerate, settle in the reactor and/or transfer lines and adhere to the inner surfaces. Thus, transfer to another reactor or final removal from the reactor for further processing is significantly impaired. This phenomenon is also called "fouling".

To some extent, the degree of fouling can be restricted by adding antistatic agents. However, as these antistatic agents can be adsorbed on the active catalyst surface, they have a detrimental impact on catalytic activity.

Thus, considering the drawbacks discussed above, it is an object of the present invention to provide a process for the preparation of a propylene random copolymer which reduces adherence of the polymeric particles to the inner reactor wall but still results in a propylene copolymer of high randomness. Of course, low stickiness in combination with high randomness should not be achieved on the expense of yield rate or process flexibility.

The finding of the present invention is that in the process a solid catalyst must be employed being not supported on external support or carrier material but featured by interior cavities without catalytic activity.

Thus the present invention is directed to a process for the preparation of a propylene random copolymer having a comonomer content within the range of 1.5 to 10.0 wt.-%, based on the total weight of the propylene random copolymer, wherein propylene is polymerised with a comonomer selected from the group consisting of ethylene, a $C_4$-$C_{20}$ $\alpha$-olefin and mixtures thereof, in the presence of a catalyst system comprising solid catalyst particles, wherein the solid catalyst particles

(a) have a specific surface area of less than 20 $m^2$/g,
(b) comprise a transition metal compound which is selected from one of the groups 4 to 10 of the periodic table or a compound of actinide or lanthanide,
(c) comprise a metal compound which is selected from one of the groups 1 to 3 of the periodic table, and
(d) comprise inclusions having a mean particle size of below 200 nm and not having catalytically active sites.

Additionally, the specification discloses a process for the preparation of a propylene random copolymer, wherein propylene is polymerised with a comonomer selected from the group consisting of ethylene, a $C_4$-$C_{20}$ $\alpha$-olefin and mixtures thereof, in the presence of a catalyst system comprising solid catalyst particles, wherein the solid catalyst particles

(a) have a specific surface area of less than 20 $m^2$/g,
(b) comprise a transition metal compound which is selected from one of the groups 4 to 10 of the periodic table or a compound of actinide or lanthanide,
(c) comprise a metal compound which is selected from one of the groups 1 to 3 of the periodic table, and
(d) comprise inclusions not having catalytically active sites.

Preferably the inclusions are free from transition metal compounds which are selected from one of the groups 4 to 10 of the periodic table and free from compounds of actinide or lanthanide. Accordingly it can be also said, that the solid particles comprise inclusions being free from transition metal compounds which are selected from one of the groups 4 to 10 of the periodic table and free from compounds of actinide or lanthanide.

Additionally it is preferred that the catalyst system is free of antistatic agents.

Alternatively the invention can be defined by a process for the manufacture of a propylene random copolymer, wherein propylene is polymerised with a comonomer selected from the group consisting of ethylene, a $C_4$-$C_{20}$ $\alpha$-olefin and mixtures thereof, in the presence of a catalyst system comprising solid catalyst particles, wherein the solid catalyst particles

(a) have a specific surface area of less than 20 m$^2$/g,

(b) comprise

(i) a transition metal compound which is selected from one of the groups 4 to 10 of the periodic table or a compound of actinide or lanthanide, and
(ii) a metal compound which is selected from one of the groups 1 to 3 of the periodic table,
wherein the transition metal compound (or the compound of actinide or lanthanide) (i) with the metal compound (ii) constitutes the active sites of said particles, and

(c) comprise inclusions not having catalytically active sites.

Preferably the inclusions are free from transition metal compounds which are selected from one of the groups 4 to 10 of the periodic table and free from compounds of actinide or lanthanide. Accordingly it can be also said, that the solid particles comprise inclusions being free from transition metal compounds which are selected from one of the groups 4 to 10 of the periodic table and free from compounds of actinide or lanthanide.

Additionally it is preferred that the catalyst system is free of antistatic agents.

Surprisingly it has been found out that with the above defined processes the preparation of a propylene random copolymer in a very efficient manner is possible. In particular the inventive process allows the manufacture of propylene random copolymers having a rather high comonomer content evenly distributed in the polymer chains. Moreover the process enables to produce propylene random material, also with rather high amounts of comonomer, being not sticky and therefore minimizing the risk of reactor fouling.

In the following the invention as defined in the two embodiments as stated above is further specified.

One essential aspect of the present invention is that the propylene random copolymer is produced in the presence of a specific catalyst system.

Accordingly a catalyst in the form of solid particles is required. These particles are typically of spherical shape, although the present invention is not limited to a spherical shape. The solid particles in accordance with the present invention also may be present in round but not spherical shapes, such as elongated particles, or they may be of irregular size. Preferred in accordance with the present invention, however, are particles having a spherical shape.

A further essential aspect of the present invention is that the catalyst particles are essentially free of pores or cavities having access to the surface. In other words the catalyst particles might have hollow voids, like pores or cavities, however such voids are not open to the surface.

Conventional Ziegler-Natta catalysts are supported on external support material. Such material has a high porosity and high surface area meaning that its pores or cavities are open to its surface. Such kind of supported catalyst may have a high activity, however a drawback of such type of catalysts is that it tends to produce sticky material in particular when high amounts of comonomer is used in the polymerization process.

Therefore it is appreciated that the catalyst as defined herein is free from external support material and has a rather low to very low surface area. A low surface area is insofar appreciated as therewith the bulk density of the produced polymer can be increased enabling a high throughput of material. Moreover a low surface area also reduces the risk that the solid catalyst particle has pores extending from the interior of the particle to the surface. Typically the catalyst particle has a surface area measured according to the commonly known BET method with N$_2$ gas as analysis adsorptive of less than 20 m$^2$/g, more preferably of less than 15 m$^2$/g, yet more preferably of less than 10 m$^2$/g. In some embodiments, the solid catalyst particle in accordance with the present invention shows a surface area of 5 m$^2$/g or less.

The catalyst particle can be additionally defined by the pore volume. Thus it is appreciated that the catalyst particle has a porosity of less than 1.0 ml/g, more preferably of less than 0.5 ml/g, still more preferably of less than 0.3 ml/g and even less than 0.2 ml/g. In another preferred embodiment the porosity is not detectable when determined with the method applied as defined in the example section.

The solid catalyst particles in accordance with the present invention furthermore show preferably a predetermined particle size. Typically, the solid particles in accordance with the present invention show uniform morphology and in particular a narrow particle size distribution.

Moreover the solid catalyst particles in accordance with the present invention typically have a mean particle size of not more than 500 μm, i.e. from 1 to 500 μm, for example 5 to 500 μm. Preferred embodiments of the present invention are solid particles having a mean particle size range of from 5 to 200 μm or from 10 to 150 μm. Smaller mean particle size ranges, however, are also suitable, such as from 5 to 100 μm. Alternative embodiments are larger mean particle size ranges, for example from 20 to 250 μm. However for the present process in particular catalyst particles with a mean particle size range from 20 to 60 μm are preferred. These mean particle size ranges of the solid particles in accordance with the present invention may be obtained as explained further below in connection with the method of preparing the solid particles.

The employed catalyst particles comprise of course one or more catalytic active components. These catalytic active components constitute the catalytically active sites of the catalyst particles. As explained in detail below the catalytic active components, i.e. the catalytically active sites are distributed within the part of the catalyst particles not forming the inclusions. Preferably they are evenly distributed in that part.

Active components according to this invention are, in addition to the transition metal compound which is selected from one of the groups 4 to 10 of the periodic table (IUPAC) or a compound of actinide or lanthanide and the metal compound which is selected from one of the groups 1 to 3 of the periodic table (IUPAC) (see above and below), also aluminium compounds, additional transition metal compounds, and/or any reaction product(s) of a transition compound (s) with group 1 to 3 metal compounds and aluminium compounds. Thus the catalyst may be formed in situ from the catalyst components, for example in solution in a manner known in the art.

The catalyst in solution (liquid) form can be converted to solid particles by forming an emulsion of said liquid catalyst phase in a continuous phase, where the catalyst phase forms the dispersed phase in the form of droplets. By solidifying the droplets, solid catalyst particles are formed.

It should also be understood that the catalyst particle prepared according to the invention may be used in a polymerisation process together with cocatalysts to form an active catalyst system, which further may comprise e.g. external donors etc.. Furthermore, said catalyst of the invention may be part of a further catalyst system. These alternatives are within the knowledge of a skilled person.

As stated above the catalyst particles comprise

(a) a transition metal compound which is selected from one of the groups 4 to 10, preferably titanium, of the periodic table (IUPAC) or a compound of an actinide or lanthanide,
(b) a metal compound which is selected from one of the groups 1 to 3 of the periodic table (IUPAC), preferably magnesium,
(c) optionally an electron donor compound, and
(d) optionally an aluminium compound.

Suitable catalyst compounds and compositions and reaction conditions for forming such a catalyst particle is in particular disclosed in WO 03/000754, WO 03/000757,

WO 2004/029112 and WO 2007/077027, all four documents are incorporated herein by reference.

Suitable transition metal compounds are in particular transition metal compounds of transition metals of groups 4 to 6, in particular of group 4, of the periodic table (IUPAC). Suitable examples include Ti, Fe, Co, Ni, Pt, and/or Pd, but also Cr, Zr, Ta, and Th, in particular preferred is Ti, like $TiCl_4$. Of the metal compounds of groups 1 to 3 of the periodic table (IUPAC) preferred are compounds of group 2 elements, in particular Mg compounds, such as Mg halides, Mg alkoxides etc. as known to the skilled person.

In particular a Ziegler-Natta catalyst (preferably the transition metal is titanium and the metal is magnesium) is employed, for instance as described in WO 03/000754, WO 03/000757, WO 2004/029112 and WO 2007/077027.

As the electron donor compound any donors known in the art can be used, however, the donor is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable dioctyl phthalate.

The aluminium compound is preferably a compound having the formula (I)

$$AlR_{3-n}X_n \qquad (I)$$

wherein

R stands for a straight chain or branched alkyl or alkoxy group having 1 to 20, preferably 1 to 10 and more preferably 1 to 6 carbon atoms,

X stands for halogen, preferably chlorine, bromine or iodine, especially chlorine and

n stands for 0,1, 2 or 3, preferably 0 or 1.

Preferably alkyl groups having from 1 to 6 carbon atoms and being straight chain alkyl groups, such as methyl, ethyl, propyl, butyl, pentyl or hexyl, preferably methyl, ethyl, propyl and/or butyl.

Illustrative examples of aluminium compounds to be employed in accordance with the present invention are diethyl aluminium ethoxide, ethyl aluminium diethoxide, diethyl aluminium methoxide, diethyl aluminium propoxide, diethyl aluminium butoxide, dichloro aluminium ethoxide, chloro aluminium diethoxide, dimethyl aluminium ethoxide.

Other suitable examples for the above defined aluminium compounds are tri-(Cl-C6)-alkyl aluminium compounds, like triethyl aluminium, tri iso-butyl aluminium, or an alkyl aluminium compound bearing one to three halogen atoms, like chlorine. In particular preferred is triethylaluminium, diethylaluminium chloride and diethyl aluminium ethoxide.

As mentioned above catalyst systems may include in addition to the solid catalyst particles cocatalysts and/ external donor(s) in a manner known in the art.

As the conventional cocatalyst, e.g. those based on compounds of group 13 of the periodic table (IUPAC), e.g. organo aluminium, such as aluminium compounds, like aluminium alkyl, aluminium halide or aluminium alkyl halide compounds (e.g. triethylaluminium) compounds, can be mentioned. Additionally one or more external donors can be used which may be typically selected e.g. from silanes or any other well known external donors in the field. External donors are known in the art and are used as stereoregulating agent in propylene polymerisation. The external donors are preferably selected from hydrocarbyloxy silane compounds and hydrocarbyloxy alkane compounds.

Typical hydrocarbyloxy silane compounds have the formula (II)

$$R'_o Si(OR'')_{4-o} \qquad (II)$$

wherein

R'    is an $\alpha$- or $\beta$-branched $C_3$-$C_{12}$-hydrocarbyl,
R''   a $C_1$-$C_{12}$-hydrocarbyl, and
o     is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the alkoxy silane compound having the formula (3) is dicyclopentyl dimethoxy silane or cyclohexylmethyl dimethoxy silane.

It is also possible to include other catalyst component(s) than said catalyst components to the catalyst of the invention.

The solid catalyst particle as defined in the instant invention is furthermore preferably characterized in that it comprises the catalytically active sites distributed throughout the solid catalyst particle, however not in those parts comprising inclusions as defined above. In accordance with the present invention, this definition means that the catalytically active sites are evenly distributed throughout the catalyst particles, preferably that the catalytically active sites make up a substantial portion of the solid catalyst particles in accordance with the present invention. In accordance with embodiments of the present invention, this definition means that the catalytically active components, i.e. the catalyst components, make up the major part of the catalyst particle.

A further requirement of the present invention is that the solid catalyst particles comprise inclusions not comprising catalytically active sites. Alternatively or additionally the inclusions can be defined as inclusions being free of transition metals of groups 4 to 6, in particular of group 4, like Ti, of the periodic table (IUPAC) and being free of a compound of actinide or lanthanide. In other words the inclusions do not comprise the catalytic active materials as defined under (b) of claim 1, i.e. do not comprise such compounds or elements, which are used to establish catalytically active sites. Thus in case the solid catalyst particle comprise compounds of any one of transition metals of groups 4 to 6, in particular of group 4, like Ti, of the periodic table (IUPAC) or a compound of actinide or lanthanide these are then not present in the inclusions.

Such inclusions are preferably (evenly) dispersed within the catalyst particles. Accordingly the solid catalyst particle can be seen also as a matrix in which the inclusions are dispersed, i.e. form a dispersed phase within the matrix phase of the catalyst particle. The matrix is then constituted by the catalytically active components as defmed above, in particular by the transition metal compounds of groups 4 to 10 of the periodic table (IUPAC) (or a compound of actinide or lanthanide) and the metal compounds of groups 1 to 3 of the periodic table (IUPAC). Of course all the other catalytic compounds as defined in the instant invention can additionally constitute to the matrix of the catalyst particles in which the inclusions are dispersed.

The inclusions usually constitute only a minor part of the total volume of the solid catalyst particles, i.e. typically below 50 vol.-%, more preferably lower than 40 vol.-% and, in particular 30 vol.-% or lower, 20 vol.-% or lower and in embodiments even 10 vol.-% or lower. A suitable range is from 8 to 30 vol.-%, more preferably 10 to 25 vol.-%.

In case the inclusions are solid material it is in particular preferred that the solid catalyst particle comprise up to 30 wt.-% solid material, more preferably up to 20 wt.-%. It is in particular preferred that the solid catalyst particle comprise inclusions being solid material in the range of 1 to 30 wt.-%, more preferably in the range of 1 to 20 wt.-% and yet more preferably in the range of 1 to 10 wt.-%.

The inclusions may be of any desired shape, including spherical as well as elongated shapes and irregular shapes. Inclusions in accordance with the present invention may have a plate-like shape or they may be long and narrow, for example in the shape of a fiber. Irregular shapes of all kind are also envisaged by the present invention. Typical inclusions, however, are either spherical or near spherical or they show plate-like shapes. Preferably the inclusions have a spherical or at least near spherical shape. It is to be noted that the inclusions are inside the catalyst particles, but essentially not extending to the surface of the particles. Thus the inclusions are not open to the surface of the catalyst particles.

The inclusions in accordance with the present invention, not comprising catalytically active sites, may be present in the form of solid material, liquids, hollow voids, optionally partially filled with a liquid and/or a solid material, or any combination thereof. It is in particular preferred that the inclusions are solid material and/or hollow voids partially filled with solid material. In a preferred embodiment the inclusions are solid material only. In particular, in the case of using solid materials, the shape of the inclusions can be determined on the basis of the shape of the solid material, or particles of solid material employed. The shape of liquids, hollow voids and hollow voids partially filled with liquid are typically determined by the process conditions during the preparation of the solid particles, as further outlined in detail below.

Typical examples of solid materials suitable for forming inclusions in accordance with the present invention are inorganic materials as well as organic, in particular organic polymeric materials, suitable examples being nano-materials, such as silica, montmorillonite, carbon black, graphite, zeolites, alumina as well as other inorganic particles, including glass nano-beads or any combination thereof. Suitable organic particles, in particular polymeric organic particles, are nano-beads made from polymers such as polystyrene, or other polymeric materials. In any case, the particulate materials employed for providing inclusions in the solid catalyst particles have to be inert towards the catalytically active sites, during the preparation of the solid catalyst particles as well as during the subsequent use in polymerization reactions. This means that the solid material is not to be interfered in the formation of active centres. The solid materials used for providing inclusions in accordance with the present invention preferably themselves have a low surface area and are more preferably non-porous.

Thus, for instance the solid material used in the present invention cannot be a magnesium-aluminum-hydroxy-carbonate. This material belongs to a group of minerals called layered double hydroxide minerals (LDHs), which according to a general definition are a broad class of inorganic lamellar compounds of basic character with high capacity for anion intercalation (Quim. Nova, Vol. 27, No.4, 601-614, 2004). This kind of materials are not suitable to be used in the invention due to the reactivity of the OH- groups included in the material, i.e. OH groups can react with the TiCl4 which is part of the active sites. This kind of reaction is the reason for a decrease in activity, and increased amount of xylene solubles.

Accordingly it is particular preferred that the solid material is selected form spherical particles of nano-scale consisting of $SiO_2$, polymeric materials and/or $Al_2O_3$. By nano-scale according to this invention is understood that the solid material has a mean particle size of below 100 nm, more preferred below 90 nm.

It has been in particular discovered that rather high amounts of comonomer can be inserted in the propylene random copolymer chain without getting sticky in case the surface area and/or the porosity of the solid material used is(are) rather low.

Thus the catalyst particles of the present invention shall in particular comprise, preferably only comprise, inclusions being solid materials having a surface area below 500 $m^2$/g, more preferably below 300 $m^2$/g, yet more preferably below 200 $m^2$/g, still more preferably below 100 $m^2$/g.

Liquids, hollow voids and hollow voids partially filled with liquid may in particular be introduced into the solid catalyst particles by using inert liquids, which preferably are immiscible with the liquids and solvents used during the preparation of the solid catalyst particles in accordance with the invention. These liquids furthermore may display a different viscosity, compared with the liquids employed during the catalyst particle preparation as solvents and/or reaction medium. Suitable examples thereof are silicon oils, perfluorinated hydrocarbons, such as hydrocarbons having from 6 to 20 carbon atoms, preferably 7 to 14 carbon atoms, with a particularly preferred example being perfluoro octane. Other inert and immiscible liquids may be also employed, including partially fluorinated hydrocarbons, perfluorinated ethers (including polyethers) and partially fluorinated ethers, as long as these liquids are inert towards the catalyst component and provide inclusions in accordance with the present invention.

Preferably, such liquids are employed in combination with a suitable surfactant, which stabilizes the inclusions during the preparation of the solid particles. For example, surfactants, e.g. surfactants based on hydrocarbons (including polymeric hydrocarbons with a molecular weight e.g. up to 10000, optionally interrupted with a heteroatom(s)), preferably halogenated hydrocarbons, such as semi-, or highly-fluorinated hydrocarbons optionally having a functional group, or, preferably semi-, highly- or perfluorinated hydrocarbons having a functionalised terminal, can be used. Surfactants can also be formed by reacting a surfactant precursor bearing at least one functional group with a compound being part of the catalyst solution or solvent and being reactive with said functional group. Examples of the surfactant precursors include e.g. known surfactants which bear at least one functional group selected e.g. from -OH, -SH, -NH$_2$, -COOH, -COONH$_2$, oxides of alkenes, oxo-groups and/or any reactive derivative of these groups, e.g. semi-, highly or perfluorinated hydrocarbons bearing one or more of said functional groups.

The inclusions of the catalyst particles typically have a size in the range of 100 nm (widest diameter), although the size is not restricted to this specific value. The present invention also contemplates inclusions having mean particle sizes of from 20 to 500 nm, with mean particle sizes of from 20 to 400, and in particular from 20 to 200 nm being preferred. In particular mean particle sizes from 30 to 100 nm are preferred. The mean particle sizes of liquids, hollow voids partially liquid filled hollow voids may, in particular, be controlled during the preparation of solid particles. The mean particle size of the inclusions may be controlled by the size of the solid material employed for the provision of inclusions, as outlined above, in connection with the control of the shape of the inclusions.

It is in particular preferred that the inclusions are solid material and more preferably that the inclusions are solid material having mean particle sizes of below 100 nm, more preferably from 10 to 90 nm, yet more preferably from 10 to 70 nm.

It should be noted that it is also an essential feature that the inclusions, in particular the solid material, has small mean particle size, i.e. below 200 nm, preferably below 100 nm, as indicated above. Thus, many materials having bigger particle size, e.g. from several hundreds of nm to $\mu$m scale, even if chemically suitable to be used in the present invention, are not the material to be used in the present invention. Such bigger particle size materials are used in catalyst preparation e.g. as traditional external support material as is known in the art. One drawback in using such kind of material in catalyst preparation, especially in final product point of view, is that this type of material leads easily to inhomogeneous material and formation of gels, which might be very detrimental in some end application areas, like in film and fibre production.

Preferably the catalyst particles of the present invention are obtained by preparing a solution of one or more catalyst components, dispersing said solution in a solvent, so that the catalyst solution forms a dispersed phase in the continuous solvent phase, and solidifying the catalyst phase to obtain the catalyst particles of the present invention. The inclusions in accordance with the present invention may be introduced by appropriately admixing said agent for forming the inclusions with the catalyst solution, during the preparation thereof or after formation of the catalyst phase, i.e. at any stage before solidification of the catalyst droplets.

Accordingly in one aspect the catalyst particles are obtainable by a process comprising the steps of

(a) contacting the catalyst components as defined above, i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,
(b) separating the two phases and adding an agent for generating said inclusions not comprising catalytically active sites to the catalyst phase,
(c) forming a finely dispersed mixture of said agent and said catalyst phase,
(d) adding the solvent phase to the finely dispersed mixture,
(e) forming an emulsion of the finely dispersed mixture in the solvent phase, wherein the solvent phase represents the continuous phase and the finely dispersed mixture forms the dispersed phase, and
(f) solidifying the dispersed phase.

In another embodiment the catalyst particles are obtainable by a process comprising the steps of

(a) contacting, in the presence of an agent for generating the inclusions not comprising catalytically active sites, the catalyst components as defined above, i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,
(b) forming an emulsion comprising a catalyst phase comprising said agent and a solvent phase, wherein the solvent phase represents the continuous phase and the catalyst phase forms the dispersed phase, and
(c) solidifying the dispersed phase.

Additional catalyst components, like compounds of group 13 metal, as described above, can be added at any step before the final recovery of the solid catalyst. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the catalyst particles as well as the size, shape, amount and distribution of the inclusions within the catalyst particles.

Particularly suitable methods for preparing the catalyst particles of the present invention are outlined below.

The catalyst solution or phase may be prepared in any suitable manner, for example by reacting the various catalyst precursor compounds in a suitable solvent. In one embodiment this reaction is carried out in an aromatic solvent, preferably toluene, so that the catalyst phase is formed in situ and separates from the solvent phase. These two phases may then be separated and an agent for forming the inclusions may be added to the catalyst phase. After subjecting this mixture of catalyst phase and agent for providing the inclusions to a suitable dispersion process, for example by mechanical mixing or application of ultrasound, in order to prepare a dispersion of the inclusion providing agent in the catalyst phase, this mixture (which may be a dispersion of solid inclusion providing agent in the catalyst phase forming a microsuspension or a microemulsion of droplets of a liquid inclusion providing agent in the catalyst phase) may be added back to the solvent phase or a new solvent, in order to form again an emulsion of the disperse catalyst phase in the continuous solvent phase. The catalyst phase, comprising the inclusion providing agent, usually is present in this mixture in the form of small droplets, corresponding in shape and size approximately to the catalyst particles to be prepared. Said catalyst particles, comprising the inclusions may then be formed and recovered in usual manner, including the solidification of the catalyst particles by heating and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The catalyst particles obtained may furthermore be subjected to further post-processing steps, such as washing, stabilizing, prepolymerization, prior to the final use in polymerisation processes.

An alternative to the above outlined method of preparing the catalyst particles of the present invention, in particular suitable for a method employing solid inclusion providing agents, is a method wherein the inclusion providing agent is already introduced at the beginning of the process, i.e. during the step of forming the catalyst solution/catalyst phase. Such a sequence of steps facilitates the preparation of the catalyst particles since the catalyst phase, after formation, has not to be separated from the solvent phase for admixture with the inclusion providing agent.

Suitable method conditions for the preparation of the catalyst phase, the admixture with the solvent phase, suitable additives therefore etc. are disclosed in the above mentioned international applications WO 03/000754, WO 03/000757, WO 2007/077027, WO 2004/029112 and WO 2007/077027, which are incorporated herein by reference.

As is derivable from the above and the following examples, the present invention allows the preparation of novel catalyst particles comprising inclusions being solid material as defined in the claims. The size, shape, amount and distribution thereof within the catalyst particles may be controlled by the agents for providing inclusions employed and the process conditions, in particular in the above outlined mixing conditions.

Moreover the present invention is also directed to the use of the above defined solid catalyst particles for the preparation of a propylene random copolymer, in particular for the preparation of a propylene random copolymer as defined in the instant invention.

The above defined catalyst system comprising the solid catalyst particles is - as stated above - used in a process for the manufacture a propylene random copolymer, in particular for the manufacture a propylene random copolymer as defined in more detail below.

The process for the manufacture for propylene random copolymer in which the above defined catalyst system comprising said solid catalyst particles is employed can be a single stage process using a bulk phase, slurry phase or gas phase reactor. However it is preferred that the propylene random copolymer is produced in a multistage process in which the catalyst system of the instant invention is employed.

Accordingly it is preferred that the propylene random copolymer is produced in a process comprising the steps

(i) preparing in a first stage a propylene random copolymer or propylene homopolymer, and
(ii) transferring the propylene random copolymer or homopolymer to a second stage where (co)polymerisation is continued to prepare another propylene random copolymer

with the proviso that at least in the first stage catalyst particles are present as defined in the instant invention.

Preferably the ethylene content in the polymer produced in the second stage is higher than in the polymer produced in the first stage.

Even more preferred in both stages the catalyst particles as defined in the instant invention are present.

Accordingly with the above defined process a propylene homopolymer / propylene random copolymer mixture is producible as well as a propylene random copolymer /propylene random copolymer mixture. The advantage of the present process is in particular that high amounts of comonomer, like ethylene, can be introduced into the polymer chain in the first stage as well as in the second stage without losing high randomness of the end material. Moreover in such process no stickiness problems occur. Thus for instance when producing a propylene random copolymer / propylene random copolymer mixture very high amounts of ethylene can be introduced in both stages obtaining a highly random propylene random copolymer material being not sticky during the process as well as after the process.

It is in particular preferred that the inventive process comprise only the two stages as defined in the instant invention, i.e. the process does not comprises further stages in which other polymers are produced.

The first stage may comprise at least one slurry reactor, preferably a loop reactor, and optionally at least one gas phase reactor, typically one or two gas phase reactor(s). The slurry reactor may be a bulk reactor, where the reaction medium is propylene.

The second stage comprises at least one gas phase reactor, typically 1 or 2 gas phase reactor(s).

Thus in a first embodiment the first stage is constituted by a slurry reactor, i.e. bulk reactor, where a first propylene homo or random copolymer is formed, and the second stage is constituted by gas phase reactor in which a second propylene random copolymer is produced.

In another preferred embodiment the first stage is constituted by a slurry reactor, i.e. bulk reactor, and a gas phase reactor, where a first propylene random copolymer is formed, and the second stage is constituted by two or one gas phase reactor(s) in which a second propylene random copolymer is produced.

It possible from the above defined multistage processes that the propylene random copolymers produced in the first and second stages are of different molecular weight.

Of course, due to the multistage nature of the inventive process both propylene random copolymers after being produced are inseparably mixed with each other.

The properties of the propylene random copolymer produced in the gas phase reactor(s) such as its comonomer content, in particular ethylene content, may nevertheless be determined by considering the corresponding values for the slurry reactor product and the final propylene random copolymer and taking into account the production split.

Preferably, in the inventive process the comonomer content of the propylene random copolymer produced in the second stage (gas phase reactor) is the same or higher than that of the propylene random copolymer produced in the first stage (slurry reactor, i.e. bulk reactor), and particularly preferred the comonomer content of the propylene random copolymer produced in the second stage (gas phase reactor) is higher than that of the propylene random copolymer produced in the first stage (slurry reactor).

The amount of monomers to be fed in both stages depends on the desired end product. Desirably a propylene random copolymer shall be obtained as defined below. Accordingly the feed amounts must be adopted thereto.

Accordingly, the comonomer content, in particular ethylene content, of the propylene random copolymer produced in the first stage (slurry reactor) is preferably at least 0.5 wt.-%, more preferably at least 1.0 wt.-%. Thus the comonomer content of the propylene random copolymer produced in the first stage (slurry reactor) is preferably in the range of 0.5 to 6.0 wt.-%, more preferably in the range of 2.0 to 5.0 wt.-%.

On the other hand the comonomer content of the propylene random copolymer produced in the second stage (gas phase reactor) is preferably at least 4.0 wt.-%, more preferably at least 5.0 wt.-%. Thus the comonomer content of the propylene random copolymer produced in the second stage (gas phase reactor) is preferably in the range of 5.0 to 12.0 wt.-%, more preferably in the range of 7.0 to 10.0 wt.-%.

In the inventive process in each of the different stages (slurry reactor and gas phase reactor) preferably a part of the final propylene random copolymer is produced. This production split between the stages may be adjusted according to the desired properties of the produced copolymer.

It is preferred that the production split between the slurry reactor and the gas phase reactor is from 30: 70 to 70: 30, more preferred from 40: 60 to 60: 40.

The feed of comonomers into the stages is adjusted to obtain a final propylene random copolymer with a comonomer, like ethylene, content preferably in the range of 1.5 to 10.0 wt.-%, more preferably in the range of 4.0 to 9.0 wt.-% and yet more preferably in the range of 5.0 to 8.0 wt.-%.

Further preferred, the comonomer used in the inventive process is at least a comonomer selected form the group consisting of ethylene and a C4 to C20 α-olefin, preferably C4 to C10 α-olefin. Accordingly the propylene random copolymer may comprise more than one comonomer, for instance two. Thus the propylene random copolymer may be a terpolymer, like a terpolymer of propylene, ethylene and 1-butene or a terpolymer of propylene, ethylene and 1-hexene.

However it is in particular preferred that the propylene comonomer comprise

(a) propylene and
(b) ethylene or another C4 to C20 α-olefin, preferably C4 to C10 α-olefin as the only monomer units in the propylene random copolymer.

Accordingly the monomer units used in the inventive process are propylene and preferably one comonomer selected from the group consisting of ethylene, 1-butene, 1-hexene, 1-heptene, 1-octene and 1-nonene and 1-decene. Particularly it is preferred that only propylene and ethylene are used as monomer feeds to obtain a propylene-ethylene random copolymer.

"Slurry reactor" designates any reactor such as a continuous or simple batch stirred tank reactor or loop reactor operating in bulk or slurry, including supercritical conditions, in which the polymer forms in particulate form.

Preferably, the slurry reactor in the inventive process is operated as a bulk reactor. "Bulk" means a polymerisation in a reaction medium comprising at least 60 wt.-% propylene monomer.

Preferably, the bulk reactor is a loop reactor.

Further preferred, in the inventive process the temperature in the loop reactor is in the range of 60 to 100 °C. In case in the loop reactor a propylene homopolymer is produced the temperature is preferably in the range of 65 to 95 °C, more preferably in the range of 70 to 85 °C. In turn in case in the loop reactor a propylene random copolymer is produced the temperature is preferably in the range of 60 to 80 °C. Still further preferred, in the inventive process the temperature in the gas phase reactor(s) is preferably in the range of 65 to 100 °C, more preferably in the range of 75 to 85 °C.

The inventive process enables also to produce a propylene random copolymer having a specific xylene solubles content. Xylene solubles are the part of the polymer soluble in cold xylene determined by dissolution in boiling xylene and letting the insoluble part crystallize from the cooling solution (for the method see below in the experimental part). The xylene solubles fraction contains polymer chains of low stereo-regularity and is an indication for the amount of non-crystalline areas.

Accordingly it is preferred that the process leads to a propylene random copolymer having a xylene solubles (XS) within the range of 4.0 wt.-% to 55.0 wt.-%, more preferably within the range of 7.0 to 40.0 wt.-% and yet more preferably within the range of 10.0 to 30.0 wt.-%, based on the total weight of the propylene random copolymer.

More detailed information about the properties of the preferred propylene random copolymer achievable by the inventive process is defined below.

The above defined process enables to produce a new propylene random copolymer having a high randomness and containing rather high amounts of comonomer. Additionally the new propylene copolymer is featured by a surprising low stickiness.

Accordingly a propylene random copolymer can be provided comprising comonomers selected from the group consisting of ethylene, C4 to C20 alpha-olefin, and any combination thereof, wherein the propylene random copolymer

(a) has a comonomer content of at least more than 3.5 wt.-%, more preferably of at least more than 5.0 wt.-%, more preferably of at least more than 6.0 wt.-%, based on the total propylene random copolymer
(b) has a randomness of at least 30 %, preferably of at least 50 % and
(c) optionally has xylene solubles (XS) of at least 10.0 wt.-%, more preferably of at least 15.0 wt.-%, based on the total propylene random copolymer.

The inventive propylene random copolymer can be unimodal or multimodal, like bimodal.

The expression "multimodal" or "bimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of maximas.

As it comes apparent from the above described process, the inventive propylene random copolymer is preferably produced in a multistage process and thus is multimodal, like bimodal.

The number average molecular weight (Mn) and the weight average molecular weight (Mw) as well as the molecular weight distribution (MWD) are determined in the instant invention by size exclusion chromatography (SEC) using Waters Alliance GPCV 2000 instrument with online viscometer. The oven temperature is 140 °C. Trichlorobenzene is used as a solvent (ISO 16014). The exact measuring method is determined in the example section.

The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C). Accordingly, it is preferred that in the present invention the propylene random copolymer has a $MFR_2$ (230 °C) in the range of 0.03 to 2000 g/10min, preferably 0.03 to 1000 g/10 min, most preferably 0.2 to 400 g/10 min.

Further preferred, the comonomer(s) present in the propylene random copolymer are selected form the group consisting of ethylene and a C4-C20 $\alpha$-olefin. Accordingly the propylene random copolymer may comprise more than one comonomer, for instance two. Thus the propylene random copolymer may be a terpolymer, like a terpolymer of propylene, ethylene and 1-butene or a terpolymer of propylene, ethylene and 1-hexene.

However it is in particular preferred that the propylene random copolymer comonomer comprise

(a) propylene and
(b) ethylene or another C4-C20 $\alpha$-olefin

as the only monomer units in the propylene random copolymer.

Accordingly the monomer units of the instant propylene random comonomer are preferably propylene and one comonomer selected from the group consisting of ethylene, 1-butene, 1-hexene, 1-heptene, 1-octene and 1-nonene and 1-decene. Propylene-ethylene random copolymers are particularly preferred.

The inventive propylene random copolymer is further defined by the rather high amount of comonomer within the polymer.

Thus it is appreciated that the comonomer content, more preferably the ethylene content, is at least 4.0 wt.-%. Preferably the comonomer content, more preferably the ethylene content, is within the range of are 4.0 to 9.0 wt.-% and yet more preferably within the range of 5.0 to 8.0 wt.-%.

As stated above the propylene random copolymer is preferably multimodal, like bimodal.

Accordingly it is preferred that the low comonomer fraction of the multimodal, preferably bimodal, propylene random copolymer has comonomer content, more preferably ethylene content, of at least 2.0 wt.-%, more preferably of at least of 3.0 wt.-%, Accordingly preferred ranges are from 2.0 to 6.0 wt.-%, more preferably from 3.0 to 5.0 wt.-% based on the total amount of the propylene random copolymer.

Further preferred, another fraction of the multimodal, preferably bimodal, propylene random copolymer has comonomer content, more preferably ethylene content, of at least 4.0 wt.-%, more preferably at least 5.0 wt.-%, Accordingly preferred ranges are from of 5.0 to 12.0 wt.-%, more preferably of 7.0 to 10.0 wt,

The present invention is further described by way of examples.

## EXAMPLES

### 1. Definitions/Measuring Methods

The following definitions of terms and determination methods apply for the above general description of the invention as well as to the below examples unless otherwise defined.

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**$MFR_2$ (230 °C)** is measured according to ISO 1133 (230 °C, 2.16 kg load).

**RANDOMNESS** in the FTIR measurements, films of 250 -mm thickness were compression molded at 225 °C and investigated on a Perkin-Elmer System 2000 FTIR instrument. The ethylene peak area (760-700 cm$^{-1}$) was used as a measure of total ethylene content. The absorption band for the structure -P-E-P- (one ethylene unit between propylene units), occurs at 733 cm$^{-1}$. This band characterizes the random ethylene content. For longer ethylene sequences (more than two units), an absorption band occurs at 720 cm$^{-1}$. Generally, a shoulder corresponding to longer ethylene runs is observed for the random copolymers. The calibration for total ethylene content based on the area and random ethylene (PEP) content based on peak height at 733 cm$^{-1}$ was made by $^{13}$C-NMR. (Thermochimica Acta, 66 (1990) 53-68). Randomness = random ethylene (-P-E-P-) content / the total ethylene content x 100%.

**Ethylene content,** in particular of the matrix, is measured with Fourier transform infrared spectroscopy (FTIR) calibrated with $^{13}$C-NMR. When measuring the ethylene content in polypropylene, a thin film of the sample (thickness about 250 mm) was prepared by hot-pressing. The area of absorption peaks 720 and 733 cm$^{-1}$ was measured with Perkin Elmer FTIR 1600 spectrometer. The method was calibrated by ethylene content data measured by $^{13}$C-NMR.

**Content of any one of the C4 to C20 $\alpha$-olefins** is determined with $^{13}$C-NMR; literature: "IR-Spektroskopie für Anwender"; WILEY-VCH, 1997 and "Validierung in der Analytik", WILEY-VCH, 1997.

### Melting temperature Tm, crystallization temperature Tc, and the degree of crystallinity:

measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

### Xylene soluble fraction (XS) and amorphous fraction (AM)

2.0 g of polymer are dissolved in 250 ml p-xylene at 135 °C under agitation. After 30±2 minutes the solution is allowed to cool for 15 minutes at ambient temperature and then allowed to settle for 30 minutes at $25\pm0.5$ °C . The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)
$m_1$ = weight of residue (g)
$v_0$ = initial volume (ml)
$v_1$ = volume of analysed sample (ml)

The solution from the second 100 ml flask is treated with 200 ml of acetone under vigorous stirring. The precipitate is filtered and dried in a vacuum-oven at 90 °C.

$$AM\% = (100 \times m_2 \times v_0) / (m_0 \times v_1)$$

$m_0$ = initial polymer amount (g)
$m_2$ = weight of precipitate (g)
$v_0$ = initial volume (ml)
$v_1$ = volume of analysed sample (ml)

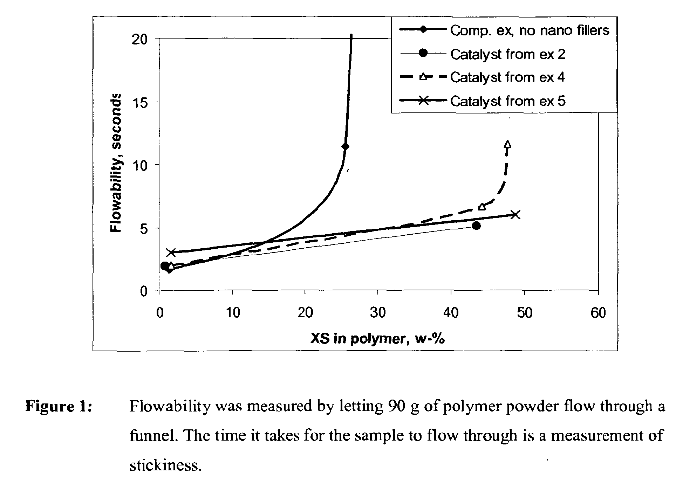

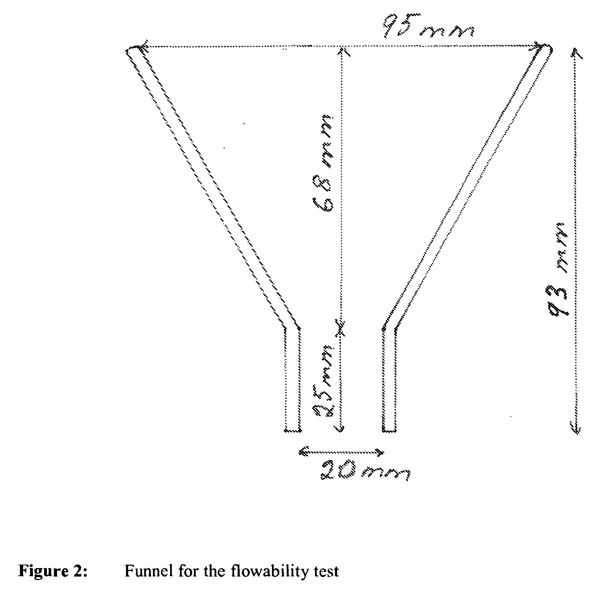

**Flowability** 90 g of polymer powder and 10 ml of xylene was mixed in a closed glass bottle and shaken by hand for 30 minutes. After that the bottle was left to stand for an additional 1.5 hour while occasionally shaken by hand. Flowability was measured by letting this sample flow through a funnel at room temperature. The time it takes for the sample to flow through is a measurement of stickiness. The average of 5 separate determinations was defined as flowability. The dimensions of the funnel can be deducted from figure 2.

**Porosity:** BET with $N_2$ gas, ASTM 4641, apparatus Micromeritics Tristar 3000; sample preparation (catalyst and polymer): at a temperature of 50 °C, 6 hours in vacuum.

**Surface area:** BET with $N_2$ gas ASTM D 3663, apparatus Micromeritics Tristar 3000:

sample preparation (catalyst and polymer): at a temperature of 50 °C, 6 hours in vacuum.

**Mean particle size** is measured with Coulter Counter LS200 at room temperature with n-heptane as medium; particle sizes below 100 nm by transmission electron microscopy

**Bulk density BD** is measured according ASTM D 1895

## Determination of Ti and Mg amounts in the catalyst

The determination of Ti and Mg amounts in the catalysts components is performed using ICP. 1000 mg/l standard solutions of Ti and Mg are used for diluted standards (diluted standards are prepared from Ti and Mg standard solutions, distilled water and $HNO_3$ to contain the same $HNO_3$ concentration as catalyst sample solutions).

50-100 mg of the catalyst component is weighed in a 20 ml vial (accuracy of weighing 0.1 mg). 5 ml of concentrated $HNO_3$ (Suprapur quality) and a few milliliters of distilled water is added. The resulting solution is diluted with distilled water to the mark in a 100 ml measuring flask, rinsing the vial carefully. A liquid sample from the measuring flask is filtered using 0.45 $\mu$m filter to the sample feeder of the ICP equipment. The concentrations of Ti and Mg in the sample solutions are obtained from ICP as mg/l.

Percentages of the elements in the catalyst components are calculated using the following equation:

$$\text{Percentage (\%)} = (A \cdot V \cdot 100\% \cdot V \cdot 1000^{-1} \cdot m^{-1}) \cdot (V_a \cdot V_b^{-1})$$

where

A = concentration of the element (mg/l)

V = original sample volume (100 ml)

m = weight of the catalyst sample (mg)

$V_a$ = volume of the diluted standard solution (ml)

$V_b$ = volume of the 1000 mg/l standard solution used in diluted standard solution (ml)

**Determination of donor amounts in the catalyst components**

The determination of donor amounts in the catalyst components is performed using HPLC (UV-detector, RP-8 column, 250 mm $\times$ 4 mm). Pure donor compounds are used to prepare standard solutions.

50-100 mg of the catalyst component is weighed in a 20 ml vial (accuracy of weighing 0.1 mg). 10 ml acetonitrile is added and the sample suspension is sonicated for 5-10 min in an ultrasound bath. The acetonitrile suspension is diluted appropriately and a liquid sample is filtered using 0.45 $\mu$m filter to the sample vial of HPLC instrument. Peak heights are obtained from HPLC.

The percentage of donor in the catalyst component is calculated using the following equation:

$$\text{Percentage (\%)} = A_1 \cdot c \cdot V \cdot A_2^{-1} \cdot m^{-1} \cdot 0.1\%$$

where

$A_1$ = height of the sample peak

c = concentration of the standard solution (mg/l)

V = volume of the sample solution (ml)

$A_2$ = height of the standard peak

m = weight of the sample (mg)

**2. Preparation of the Examples:**

**Example 1:** Preparation of a soluble Mg-complex

A magnesium complex solution was prepared by adding, with stirring, 55.8 kg of a 20 % solution in toluene of BOMAG $(Mg(Bu)_{1,5}(Oct)_{0,5})$ to 19.4 kg 2-ethylhexanol in a 150 l steel reactor. During the addition the reactor contents were maintained below 20 °C. The temperature of the reaction mixture was then raised to 60 °C and held at that level for 30 minutes with stirring, at which time reaction was complete. 5.50 kg 1,2-phthaloyl dichloride was then added and stirring of the reaction mixture at 60 °C was continued for another 30 minutes. After cooling to room temperature a yellow solution was obtained.

**Example 2:** Catalyst with internal pore structure

24 kg titanium tetrachloride was placed in a 90 l steel reactor. A mixture of 0,190 kg $SiO_2$ nanoparticles (mean particle size 80 nm; surface area 440 m$^2$/g; bulk density 0.063 g/cm$^3$) provided by Nanostructured & Amorpohous Inc. (NanoAmor) and 21.0 kg of Mg-complex were then added to the stirred reaction mixture over a period of two hours. During the addition of the Mg-complex the reactor contents were maintained below 35 °C.

4.5 kg n-heptane and 1.05 l Viscoplex 1-254 of RohMax Additives GmbH (a polyalkyl methacrylate with a viscosity at 100 °C of 90 mm$^2$/s and a density at 15 °C of 0.90 g/ml) were then added to the reaction mixture at room temperature and stirring was maintained at that temperature for a further 60 minutes.

The temperature of the reaction mixture was then slowly raised to 90°C over a period of 60 minutes and held at that level for 30 minutes with stirring. After settling and siphoning the solids underwent washing with a mixture of 0,244 l of a 30 % solution in toluene of diethyl aluminum dichlorid and 50 kg toluene for 110 minutes at 90 °C, 30 kg toluene for 110 minutes at 90 °C, 30 kg n-heptane for 60 minutes at 50 °C, and 30 kg n-heptane for 60 minutes at 25 °C.

Finally, 4.0 kg white oil (Primol 352; viscosity at 100 °C of 8.5 mm$^2$/s; density at 15 °C of 5 0.87 g/ml) was added to the reactor. The obtained oil slurry was stirred for a further 10 minutes at room temperature before the product was transferred to a storage container.

From the oil slurry a solids content of 23.4 wt.-% was analyzed.

**Example 3A:** Compact catalyst particles - no internal pores

Same as in example 2, but no SiO$_2$ nano-particles were added to the Mg-complex.

**Example 3B:** Preparation of Catalyst with solid material (Comparative Example)

19.5 ml titanium tetrachloride was placed in a 300 ml glass reactor equipped with a mechanical stirrer. 150 mg of EXM 697-2 (magnesium-aluminum-hydroxy-carbonate from Sud-Chemie AG having a mean particle size well above 300 nm) were added thereto. Then 10.0 ml of n-heptane was added. Mixing speed was adjusted to 170 rpm, and 32.0 g Mg-complex was slowly added over a period of 2 minutes. During the addition of the Mg-complex the reactor temperature was kept below 30° C.

A solution of 3.0 mg polydecene in 1.0 ml toluene and 2.0 ml Viscoplex 1-254 were then added to the reaction mixture at room temperature. After 10 minutes stirring, the temperature of the reaction mixture was slowly raised to 90 °C over a period of 20 minutes and held at that level for 30 minutes with stirring.

After settling and syphoning the solids underwent washing with 100 ml toluene at 90 °C for 30 minutes, twice with 60 ml heptane for 10 minutes at 90 °C and twice with 60 ml pentane for 2 minutes at 25 °C. Finally, the solids were dried at 60 °C by nitrogen purge. From the catalyst 13.8 wt- % of magnesium, 3.0 wt-% titanium and 20.2 wt.-% di(2-ethylhexy)phthalate (DOP) was analyzed.

The test homopolymerization was carried out as for catalyst example 2.

**Example 4:**

All raw materials were essentially free from water and air and all material additions to the reactor and the different steps were done under inert conditions in nitrogen atmosphere. The water content in propylene was less than 5 ppm.

The polymerisation was done in a 5 litre reactor, which was heated, vacuumed and purged with nitrogen before taken into use. 138 µl TEA (tri ethyl Aluminium, from Witco used as received), 47 µl donor Do (dicyclo pentyl dimethoxy silane, from Wacker, dried with molecular sieves) and 30 ml pentane (dried with molecular sieves and purged with nitrogen) were mixed and allowed to react for 5 minutes. Half of the mixture was added to the reactor and the other half was mixed with 12.4 mg highly active and stereo specific Ziegler Natta catalyst of example 2. After about 10 minutes was the ZN catalyst/TEA/donor D/pentane mixture added to the reactor. The Al/Ti molar ratio was 150 and the Al/Do molar ratio was 5. 350 mmol hydrogen and 1400 g of propylene were added to the reactor. Ethylene was added continuously during polymerisation and totally 19.2 g was added. The temperature was increased from room temperature to 70 °C during 16 minutes. The reaction was stopped, after 30 minutes at 70 °C, by flashing out unreacted monomer. Finally the polymer powder was taken out from the reactor and analysed and tested. The ethylene content in the product was 3.7 w-%. The other polymer details are seen in table 3.

**Example 5:**

This example was done in accordance with example 4, but after having flashed out unreacted propylene after the bulk polymerisation step the polymerisation was continued in gas phase. After the bulk phase the reactor was pressurised up to 5 bar and purged three times with a 0.085 mol/mol ethylene/propylene mixture. 150 mmol hydrogen was added and temperature was increased to 80 °C and pressure with the aforementioned ethylene/propylene mixture up to 20 bar during 13 minutes. Consumption of ethylene and propylene was followed from scales. The reaction was allowed to continue until in total 459 g of propylene and propylene had been fed to the reactor. The total yield was 598 g, which means that half of the final product was produced in the bulk phase polymerisation and half in the gas phase polymerisation. When opening the reactor it was seen that the polymer powder was free flowing. XS of the polymer was 22 wt.-% and ethylene content in the product was 6.0 wt.-%, meaning that ethylene content in material produced in the gas phase was 8.3 wt.-%. The powder is not sticky in the flowability test and the flowability value is very low, 2.3 seconds. Other details are seen in table 3.

**Example 6:** Comparative Example

This example was done in accordance with example 4 with the exception that the catalyst of example 3 is used. Ethylene content in the polymer was 3.7 wt.-%. The other details are shown in table 3.

**Example 7:** Comparative Example

This example was done in accordance with example 6, but after having flashed out unreacted propylene after the bulk polymerisation step the polymerisation was continued in gas phase, as described in example 5. When opening the reactor after polymerisation it was seen that about 2/3 of the polymer powder was loosely glued together. XS of the product was 23 wt.-%. Ethylene content in the final product was 6.3 wt.-%, which means that ethylene in material produced in the gas phase was 8.9 wt.-%. In the flowability test the powder show tendency to stickiness and the flowability value is as high as 5.7 seconds. The other details are shown in table 3.

**Table 1:** Properties of the catalyst particles

|  |  | Ex 2 | Ex 3A |
|---|---|---|---|
| Ti | [wt.-%] | 2.56 | 3.81 |
| Mg | [wt.-%] | 11.6 | 11.4 |
| DOP | [wt.-%] | 22.7 | 24.4 |
| Nanoparticles | [wt.-%] | 7.4 | - |
| $d_{50}$ | [$\mu$m] | 25.6 | 21.9 |
| Mean | [$\mu$m] | 25.60 | 20.2 |
| Surface area* | [m$^2$/g] | 13,0 | <5 |
| Porosity | [ml/g] | 0,09 | - |

*the lowest limit for measure surface area by the used method is 5 m$^2$/g

**Test Homopolymerisation with catalysts of examples 2, 3A and 3B,**

The propylene bulk polymerisation was carried out in a stirred 5 l tank reactor. About 0.9 ml triethyl aluminium (TEA) as a co-catalyst, ca. 0.12 ml cyclohexyl methyl dimethoxy silane (CMMS) as an external donor and 30 ml n-pentane were mixed and allowed to react for 5 minutes. Half of the mixture was then added to the polymerisation reactor and the other half was mixed with about 20 mg of a catalyst. After additional 5 minutes the catalyst/TEA/donor/n-pentane mixture was added to the reactor. The Al/Ti mole ratio was 250 mol/mol and the Al/CMMS mole ratio was 10 mol/mol. 70 mmol hydrogen and 1400 g propylene were introduced into the reactor and the temperature was raised within ca 15 minutes to the polymerisation temperature 80 °C. The polymerisation time after reaching polymerisation temperature was 60 minutes, after which the polymer formed was taken out from the reactor.

**Table 2:** Test Homopolymerisation with catalysts of examples 2, 3A and 3B

|  |  | Ex 2 | Ex 3A | EX 3B |
|---|---|---|---|---|
| Activity | [kg PP/g cat* 1h] | 34.2 | 31.9 | 27.6 |
| XS | [wt.-%] | 1.3 | 1.6 | 2.1 |
| MFR | [g/10 min] | 7.4 | 8.0 | 5.9 |
| Bulk density | [kg/m$^3$] | 517 | 528 | 400 |
| Surface area* | [m$^2$/g] | <5 | <5 |  |
| Porosity | [ml/g] | 0,0 | - |  |

*the lowest limit for measure surface area by the used method is 5 m$^2$/g From the test homopolymerization results it can be seen that polymer produced with comparative catalyst 3B, i.e. catalyst with solid material being magnesium-aluminum-hydroxy-carbonate has clearly lower activity as well clearly higher XS. The solid material used in comparative example 3B has particles from several hundreds nm to several micrometers.

**Table 3A:** Polymerization results

|  |  | Ex 4 | Ex 5 |
|---|---|---|---|
| Cat amount | [mg] | 12.4 | 12.5 |

(continued)

| | | Ex 4 Comp | Ex 5 Comp |
|---|---|---|---|
| Bulk | | | |
| Ethylene fed | [g] | 19.2 | 19.3 |
| Gas phase polymerisation | | | |
| Time | [min] | - | 65 |
| Ethylene/propylene in feed | [mol/mol] | - | 0.085 |
| Ethylene fed | [g] | - | 25 |
| Propylene fed | [g] | - | 434 |
| Yield | [g] | 282 | 598 |
| Split: Bulk/gas phase material | weight/weight | 100/0 | 50/50 |
| Polymer | | | |
| Ethylene | [wt.-%] | 3.7 | 6 |
| Ethylene in gas phase material | [wt.-%] | - | 8.3 |
| Randomness | % | 75.6 | 67.7 |
| XS | [wt.-%] | 6.7 | 22 |
| MFR | [g/10min] | 5.0 | 4.0 |
| Melting point | [°C] | 140.1 | 134.7 |
| Crystallinity | [%] | 36 | 27 |
| Flow average | [s] | - | 2.3 |

**Table 3B:** Polymerization results

| | | Ex 6 Comp | Ex 7 Comp |
|---|---|---|---|
| Cat amount | [mg] | 16.2 | 16.2 |
| Bulk | | | |
| Ethylene fed | [g] | 19.7 | 19.3 |
| Gas phase polymerisation | | | |
| Time | [min] | - | 77 |
| Ethylene/propylene in feed | [mol/mol] | - | 0.085 |
| Ethylene fed | [g] | - | 26.2 |
| Propylene fed | [g] | - | 467 |
| Yield | [g] | 318 | 630 |
| Split: Bulk/gas phase material | weight/weight | 100/0 | 50/50 |
| Polymer | | | |
| Ethylene | [wt.-%] | 3.7 | 6.3 |
| Ethylene in gas phase material | [wt.-%] | - | 8.9 |
| Randomness | % | 75.7 | 66.9 |
| XS | [wt.-%] | 7.6 | 23.3 |
| MFR | [g/10min] | 7.5 | 5.8 |
| Melting point | [°C] | 139 | 132.5 |
| Crystallinity | [%] | 36 | 27 |
| Flow average | [s] | - | 5.7 |

## Claims

1. A process for the preparation of a propylene random copolymer having a comonomer content within the range of 1.5 to 10.0 wt.-%, based on the total weight of the propylene random copolymer, wherein propylene is polymerised with a comonomer selected from the group consisting of ethylene, a $C_4$-$C_{20}$ $\alpha$-olefin and mixtures thereof, in the presence of a catalyst system comprising solid catalyst particles, wherein the solid catalyst particles

   (a) have a specific surface of less than 20 m$^2$/g,

(b) comprise a transition metal compound which is selected from one of the groups 4 to 10 of the periodic table or a compound of actinide or lanthanide,

(c) comprise a metal compound which is selected from one of the groups 1 to 3 of the periodic table, and

(d) comprise inclusions having a mean particle size of below 200 nm and not having catalytically active sites.

2. The process according to claim 1, wherein the inclusions are free

(a) of transition metal compounds which are selected from one of the groups 4 to 10 of the periodic table (IUPAC) and

(b) of compounds of actinide or lanthanide.

3. The process according to one of the preceding claims, wherein

(a) propylene is polymerised with ethylene and/or a $C_4$ to $C_{20}$ alpha-olefin, preferably propylene is polymerized with ethylene,

and/or

(b) the propylene random copolymer has a comonomer content within the range of 4.0 to 9.0 wt.-%, based on the total weight of the propylene random copolymer.

4. The process according to one of the preceding claims, wherein

(a) the propylene random copolymer has a content of polymer solubles in xylene (XS) within the range of 4.0 to 55.0 wt.-%, preferably within the range of 7.0 to 40.0 wt.-%,

and/or

(b) the catalyst is a Ziegler-Natta type catalyst.

5. The process according to one of the preceding claims 1 to 4, wherein the propylene random copolymer is prepared in a multistage process.

6. The process according to claim 5, wherein

(i) in a first stage a first propylene random copolymer or propylene homopolymer is prepared, and

(ii) the first propylene random copolymer or propylene homopolymer is transferred to a second stage where copolymerisation is continued to prepare a second propylene random copolymer in the presence of the first propylene random copolymer or propylene homopolymer,

with the proviso that at least in the first stage a solid catalyst particle is present as defined in anyone of the claims and preferably with the proviso that the second propylene random copolymer has a higher comonomer content than the polymer of the first stage.

7. The process according to claim 6, wherein

(a) the first stage comprises at least one bulk phase or slurry phase reactor, preferably a loop reactor, optionally in combination with a gas phase reactor

and/or

(b) wherein the second stage comprises at least one gas phase reactor.

8. The process according to claim 6 or 7, wherein

(a) the first propylene random copolymer has a comonomer content within the range of 0.5 to 6.0 wt.-%, preferably in the range of 2.0 to 5.0 wt.-%

and/or

(b) the amount of comonomer introduced into the propylene random copolymer in the second stage is from 5.0 to 12.0 wt.-%, preferably is from 7.0 to 10.0 wt.-%

and/or

(c) wherein the reactor split between the first stage and the second stage is from 30 : 70 to 70 : 30.

9. The process according to one of the preceding claims, wherein the solid catalyst particles

(a) are spherical,
and/or
(b) have a mean particle size below 500 $\mu$m,
and/or
(c) have a specific surface area of less than 10 m$^2$/g,
and/or
(d) have a pore volume of less than 1.0 ml/g.

10. The process according to one of the preceding claims, wherein the solid catalyst particles comprise

(a) an internal electron donor compound
and/or
(b) up to 30.0 wt.-% inclusions.

11. The process according to one of the preceding claims, wherein the inclusions

(a) are evenly distributed within the solid catalyst particles
and/or
(b) have an average volume percentage from 8 to 30 vol% based on the volume of the solid particles
and/or
(c) are selected from the group consisting of

(i) hollow voids, optionally partially filled with a liquid and/or a solid material,
(ii) liquids,
(iii) solid material, and
(iv) mixtures of (i) to (iii).

12. The process according to claim 11 (c), wherein the solid material

(a) is selected from inorganic materials, organic materials, preferably polymers, or any combination thereof,
and/or
(b) has a mean particle size below 100 nm,
and/or
(c) has a specific surface area below 500 m$^2$/g.

13. The process according to one of the preceding claims, wherein the solid catalyst particles are obtainable by a process comprising the following steps:

(a) contacting a metal compound which is selected from one of the groups 1 to 3 of the periodic table (IUPAC) with a transition metal compound which is selected from one of the groups 4 to 10 of the periodic table (IUPAC) or a compound of an actinide or lanthanide to form a reaction product in the presence of a solvent, leading to the formation of a liquid/liquid two-phase system comprising a catalyst phase and a solvent phase,
(b) separating the two phases and adding an agent for generating said inclusions not comprising catalytically active sites to the catalyst phase,
(c) forming a finely dispersed mixture of said agent and said catalyst phase,
(d) adding the solvent phase to the finely dispersed mixture,
(e) forming an emulsion of the finely dispersed mixture in the solvent phase,
wherein the solvent phase represents the continuous phase and the finely dispersed mixture forms the dispersed phase, and
(f) solidifying the dispersed phase.

14. The process according to one of the claims 1 to 12, wherein the solid catalyst particles are obtainable by a process comprising the following steps:

(a) contacting, in the presence of an agent for generating the inclusions not comprising catalytically active sites, a metal compound which is selected from one of the groups 1 to 3 of the periodic table (IUPAC) with a transition metal compound which is selected from one of the groups 4 to 10 of the periodic table (IUPAC) or a compound of an actinide or lanthanide to form a reaction product in the presence of a solvent, leading to the formation of a liquid/liquid two-phase system comprising a catalyst phase and a solvent phase,
(b) forming an emulsion comprising a catalyst phase comprising said agent and a solvent phase, wherein the solvent phase represents the continuous phase and the catalyst phase forms the dispersed phase, and
(c) solidifying the dispersed phase.

15. Use of the catalyst in the form of solid particles as defined in one of the claims 1 to 12 for the preparation of a propylene random copolymer.

**Patentansprüche**

1. Verfahren zur Herstellung eines statistischen Propylen-Copolymers mit einem Comonomer-Gehalt in dem Bereich von 1,5 bis 10,0 Gew.-%, bezogen auf das Gesamtgewicht des statistischen Propylen-Copolymers, wobei Propylen mit einem Comonomer polymerisiert wird, ausgewählt aus der Gruppe, bestehend aus Ethylen, einem $C_4$-$C_{20}$ $\alpha$-Olefin und Gemischen davon, in Gegenwart von einem KatalysatorSystem, umfassend feste Katalysator-Teilchen, wobei die festen Katalysator-Teilchen

(a) eine spezifische Oberfläche von weniger als 20 m$^2$/g aufweisen,
(b) eine Übergangs-Metall-Verbindung umfassen, die aus einer der Gruppen 4 bis 10 des Periodensystems oder einer Verbindung von Actinid oder Lanthanid ausgewählt ist,
(c) eine Metall-Verbindung umfassen, die aus einer der Gruppen 1 bis 3 des Periodensystems ausgewählt ist, und
(d) Einschlüsse umfassen, die eine mittlere Teilchengröße von unter 200 nm aufweisen und keine katalytisch aktiven Stellen aufweisen.

2. Verfahren nach Anspruch 1, wobei die Einschlüsse frei sind

(a) von Übergangs-Metall-Verbindungen, die aus einer der Gruppen 4 bis 10 des Periodensystems (IUPAC) ausgewählt sind und
(b) von Verbindungen von Actinid oder Lanthanid.

3. Verfahren nach einem der vorangehenden Ansprüche, wobei

(a) Propylen mit Ethylen und/oder einem $C_4$-$C_{20}$ $\alpha$-Olefin polymerisiert wird, vorzugsweise Propylen mit Ethylen polymerisiert wird,
und/oder
(b) das statistische Propylen-Copolymer einen Comonomer-Gehalt in dem Bereich von 4,0 bis 9,0 Gew.-%, bezogen auf das Gesamtgewicht von dem statistischen Propylen-Copolymer, aufweist.

4. Verfahren nach einem der vorangehenden Ansprüche, wobei

(a) das statistische Propylen-Copolymer einen Gehalt an in Xylol löslichem (XS) Polymer in dem Bereich von 4,0 bis 55,0 Gew.-%, vorzugsweise in dem Bereich von 7,0 bis 40,0 Gew.-%, aufweist,
und/oder
(b) der Katalysator ein Katalysator vom Ziegler-Natta-Typ ist.

5. Verfahren nach einem der vorangehenden Ansprüche 1 bis 4, wobei das statistische Propylen-Copolymer in einem Mehrstufen-Verfahren hergestellt wird.

6. Verfahren nach Anspruch 5, wobei

(i) in einer ersten Stufe ein erstes statistisches Propylen-Copolymer oder Propylen-Homopolymer hergestellt wird, und
(ii) das erste statistische Propylen-Copolymer oder Propylen-Homopolymer zu einer zweiten Stufe überführt wird, in der die Copolymerisation fortgesetzt wird, um ein zweites statistisches Propylen-Copolymer in Gegenwart von dem ersten statistischen Propylen-Copolymer oder Propylen-Homopolymer herzustellen,

mit der Maßgabe, dass mindestens in der ersten Stufe ein wie in einem der Ansprüche definiertes festes Katalysator-Teilchen vorliegt und vorzugsweise mit der Maßgabe, dass das zweite statistische Propylen-Copolymer einen höheren Comonomer-Gehalt als das Polymer der ersten Stufe aufweist.

7. Verfahren nach Anspruch 6, wobei

(a) die erste Stufe mindestens einen Masse-Phasen- oder Suspensions-Phasen-Reaktor, vorzugsweise einen Schleifen-Reaktor, umfasst, gegebenenfalls in Kombination mit einem Gasphasen-Reaktor, und/oder
(b) wobei die zweite Stufe mindestens einen Gasphasen-Reaktor umfasst.

8. Verfahren nach Anspruch 6 oder 7, wobei

(a) das erste statistische Propylen-Copolymer einen Comonomer-Gehalt in dem Bereich von 0,5 bis 6,0 Gew.-%, vorzugsweise in dem Bereich von 2,0 bis 5,0 Gew.-%, aufweist, und/oder
(b) die Menge an Comonomer, eingeführt in das statistische Propylen-Copolymer in der zweiten Stufe, von 5,0 bis 12,0 Gew.-% ist, vorzugsweise von 7,0 bis 10,0 Gew.-% ist, und/oder
(c) wobei die Reaktor-Aufteilung zwischen der ersten Stufe und der zweiten Stufe von 30 : 70 bis 70 : 30 ist.

9. Verfahren nach einem der vorangehenden Ansprüche, wobei die festen Katalysator-Teilchen

(a) kugelförmig sind, und/oder
(b) eine mittlere Teilchengröße unter 500 $\mu$m aufweisen, und/oder
(c) eine spezifische Oberfläche von weniger als 10 m$^2$/g aufweisen, und/oder
(d) ein Porenvolumen von weniger als 1,0 ml/g aufweisen.

10. Verfahren nach einem der vorangehenden Ansprüche, wobei die festen Katalysator-Teilchen umfassen

(a) eine innere Elektronen-Donor-Verbindung und/oder
(b) bis zu 30,0 Gew.-% Einschlüsse.

11. Verfahren nach einem der vorangehenden Ansprüche, wobei die Einschlüsse

(a) gleichmäßig in den festen Katalysator-Teilchen verteilt sind und/oder
(b) einen mittleren Volumen-Prozentsatz von 8 bis 30 Vol.-%, bezogen auf das Volumen der festen Teilchen, aufweisen und/oder
(c) ausgewählt sind aus der Gruppe, bestehend aus

(i) unbesetzten Hohlräumen, gegebenenfalls teilweise gefüllt mit einem flüssigen und/oder einem festen Material,
(ii) Flüssigkeiten,
(iii) festem Material, und
(iv) Gemischen von (i) bis (iii).

12. Verfahren nach Anspruch 11(c), wobei das feste Material

(a) ausgewählt ist aus anorganischen Materialien, organischen Materialien, vorzugsweise Polymeren, oder einer beliebigen Kombination davon, und/oder
(b) eine mittlere Teilchengröße unter 100 nm aufweist, und/oder
(c) eine spezifische Oberfläche unter 500 m$^2$/g aufweist.

13. Verfahren nach einem der vorangehenden Ansprüche, wobei die festen Katalysator-Teilchen durch ein Verfahren erhältlich sind, umfassend die nachstehenden Schritte:

(a) In-Kontakt-Bringen einer Metall-Verbindung, die aus einer der Gruppen 1 bis 3 des Periodensystems (IUPAC) ausgewählt ist, mit einer Übergangs-Metall-Verbindung, die aus einer der Gruppen 4 bis 10 des Periodensystems (IUPAC) oder einer Verbindung von einem Actinid oder Lanthanid ausgewählt ist, um ein Reaktionsprodukt in Gegenwart von einem Lösungsmittel zu bilden, was zu der Bildung von einem flüssig / flüssig-Zwei-Phasensystem führt, umfassend eine Katalysator-Phase und eine Lösungsmittel-Phase,

(b) Trennen der zwei Phasen und Zusetzen eines Mittels zum Erzeugen der keine katalytisch aktiven Stellen umfassenden Einschlüsse zu der Katalysator-Phase,

(c) Bilden eines fein-dispersen Gemisches von dem Mittel und der Katalysator-Phase,

(d) Zusetzen der Lösungsmittel-Phase zu dem fein-dispersen Gemisch,

(e) Bilden einer Emulsion von dem fein-dispersen Gemisch in der Lösungsmittel-Phase, wobei die Lösungsmittel-Phase die kontinuierliche Phase wiedergibt und das fein-disperse Gemisch die disperse Phase bildet, und

(f) Verfestigen der dispersen Phase.

14. Verfahren nach einem der Ansprüche 1 bis 12, wobei die festen Katalysator-Teilchen durch ein Verfahren erhältlich sind, umfassend die nachstehenden Schritte:

(a) In-Kontakt-Bringen in Gegenwart von einem Mittel zum Erzeugen der keine katalytisch aktiven Stellen umfassenden Einschlüsse einer Metall-Verbindung, die aus einer der Gruppen 1 bis 3 des Periodensystems (IUPAC) ausgewählt ist, mit einer Übergangs-Metall-Verbindung, die aus einer der Gruppen 4 bis 10 des Periodensystems (IUPAC) oder einer Verbindung von einem Actinid oder Lanthanid ausgewählt ist, um ein Reaktionsprodukt in Gegenwart von einem Lösungsmittel zu bilden, was zu der Bildung von einem flüssig / flüssig-Zwei-Phasensystem führt, umfassend eine Katalysator-Phase und eine Lösungsmittel-Phase,

(b) Bilden einer Emulsion, umfassend eine Katalysator-Phase, umfassend das Mittel und eine Lösungsmittel-Phase, wobei die Lösungsmittel-Phase die kontinuierliche Phase wiedergibt und die Katalysator-Phase die disperse Phase bildet, und

(c) Verfestigen der dispersen Phase.

15. Verwendung des Katalysators in Form von festen Teilchen, wie in einem der Ansprüche 1 bis 12 definiert, für die Herstellung von einem statistischen Propylen-Copolymer.

## Revendications

1. Procédé pour la préparation d'un copolymère statistique de propylène présentant une teneur en comonomère située dans la plage allant de 1,5 à 10,0 % en poids par rapport au poids total du copolymère statistique de propylène, dans lequel le propylène est polymérisé avec un comonomère choisi dans l'ensemble constitué par l'éthylène, une $\alpha$-oléfine en $C_4$ à $C_{20}$ et leurs mélanges, en présence d'un système catalyseur comprenant des particules de catalyseur solide,
dans lequel les particules de catalyseur solide

(a) présentent une surface spécifique inférieure à 20 $m^2$/g,

(b) comprennent un composé de métal de transition qui est choisi parmi l'un des Groupes 4 à 10 du Tableau Périodique et un composé actinide ou lanthanide,

(c) comprennent un composé métallique qui est choisi parmi l'un des Groupes 1 à 3 du Tableau Périodique, et

(d) comprennent des inclusions présentant une granulométrie moyenne inférieure à 200 nm et ne comportant pas de sites catalytiquement actifs.

2. Procédé selon la revendication 1, dans lequel les inclusions sont exemptes

(a) de composés de métal de transition choisis parmi l'un des Groupes 4 à 10 du Tableau Périodique (IUPAC) et

(b) de composés actinides ou lanthanides.

3. Procédé selon l'une des revendications précédentes, dans lequel

(a) le propylène est polymérisé avec de l'éthylène et/ou une $\alpha$-oléfine en $C_4$ à $C_{20}$, de préférence le propylène est polymérisé avec de l'éthylène, et/ou

(b) le copolymère statistique de propylène présente une teneur en comonomère située dans la plage allant de 4,0 à 9,0 % en poids par rapport au poids total du copolymère statistique de propylène.

**4.** Procédé selon l'une des revendications précédentes, dans lequel

(a) le copolymère statistique de propylène présente une teneur en constituants polymères solubles dans le xylène (XS) située dans la plage allant de 4,0 à 55,0 % en poids, de préférence dans la plage allant de 7,0 à 40,0 % en poids, et/ou
(b) le catalyseur est un catalyseur de type Ziegler-Natta.

**5.** Procédé selon l'une des revendications 1 à 4 précédentes, dans lequel le copolymère statistique de propylène est préparé dans un procédé à étages multiples.

**6.** Procédé selon la revendication 5, dans lequel

(i) dans un premier étage, un premier copolymère statistique de propylène ou homopolymère de propylène est préparé, et
(ii) le premier copolymère statistique de propylène ou homopolymère de propylène est transféré dans un deuxième étage où la copolymérisation se poursuit pour préparer un deuxième copolymère statistique de propylène en présence du premier copolymère statistique de propylène ou homopolymère de propylène,

à la condition que, dans au moins le premier étage, une particule de catalyseur solide, telle que définie dans l'une quelconque des revendications, soit présente et, de préférence, à la condition que le deuxième copolymère statistique de propylène présente une teneur en comonomère supérieure à celle du polymère du premier étage.

**7.** Procédé selon la revendication 6, dans lequel

(a) le premier étage comprend au moins un réacteur en phase en masse ou en phase en suspension, de préférence un réacteur à boucle, éventuellement en combinaison avec un réacteur en phase gazeuse, et/ou
(b) le deuxième étage comprend au moins un réacteur en phase gazeuse.

**8.** Procédé selon la revendication 6 ou 7, dans lequel

(a) le premier copolymère statistique de propylène présente une teneur en comonomère située dans la plage allant de 0,5 à 6,0 % en poids, de préférence dans la plage allant de 2,0 à 5,0 % en poids, et/ou
(b) la quantité de comonomère introduite dans le copolymère statistique de propylène dans le deuxième étage est de 5,0 à 12,0 % en poids, de préférence de 7,0 à 10,0 % en poids, et/ou
(c) la division du réacteur entre le premier étage et le deuxième étage est de 30/70 à 70/30.

**9.** Procédé selon l'une des revendications précédentes, dans lequel les particules de catalyseur solide

(a) sont sphériques, et/ou
(b) présentent une granulométrie moyenne inférieure à 500 $\mu$m, et/ou
(c) présentent une surface spécifique inférieure à 10 m$^2$/g, et/ou
(d) présentent un volume de pores inférieur à 1,0 ml/g.

**10.** Procédé selon l'une des revendications précédentes, dans lequel les particules de catalyseur solide comprennent

(a) un composé donneur d'électron interne, et/ou
(b) jusqu'à 30,0 % en poids d'inclusions.

**11.** Procédé selon l'une des revendications précédentes, dans lequel les inclusions

(a) sont uniformément distribuées à l'intérieur des particules de catalyseur solide, et/ou
(b) présentent un pourcentage volumique moyen de 8 à 30 % en volume par rapport au volume des particules solides, et/ou
(c) sont choisies dans l'ensemble constitué par

(i) les vides creux, éventuellement partiellement remplis d'un matériau liquide et/ou solide,
(ii) les liquides,
(iii) un matériau solide, et

(iv) les mélanges de (i) à (iii).

**12.** Procédé selon la revendication 11(c), dans lequel le matériau solide

(a) est choisi parmi les matériaux inorganiques, les matériaux organiques, de préférence les polymères, ou l'une quelconque de leurs combinaisons, et/ou
(b) présente une granulométrie moyenne inférieure à 100 nm, et/ou
(c) présente une surface spécifique inférieure à 500 m$^2$/g.

**13.** Procédé selon l'une des revendications précédentes, dans lequel les particules de catalyseur solide peuvent être obtenues par un procédé comprenant les étapes suivantes :

(a) mise en contact d'un composé métallique choisi parmi l'un des Groupes 1 à 3 du Tableau Périodique (IUPAC) avec un composé de métal de transition choisi parmi l'un des Groupes 4 à 10 du Tableau Périodique (IUPAC) ou un composé actinide ou lanthanide pour former un produit réactionnel en présence d'un solvant, ce qui conduit à la formation d'un système biphasique liquide/liquide comprenant une phase de catalyseur et une phase de solvant,
(b) séparation des deux phases et addition à la phase de catalyseur d'un agent pour générer lesdites inclusions ne comprenant pas de sites catalytiquement actifs,
(c) formation d'un mélange finement dispersé dudit agent et de ladite phase de catalyseur,
(d) addition de la phase de solvant au mélange finement dispersé,
(e) formation d'une émulsion du mélange finement dispersé dans la phase de solvant, la phase de solvant représentant la phase continue et le mélange finement dispersé formant la phase dispersée, et
(f) solidification de la phase dispersée.

**14.** Procédé selon l'une des revendications 1 à 12, dans lequel les particules de catalyseur solide peuvent être obtenues par un procédé comprenant les étapes suivantes :

(a) mise en contact, en présence d'un agent pour générer les inclusions ne comprenant pas de sites catalytiquement actifs, d'un composé métallique choisi parmi l'un des Groupes 1 à 3 du Tableau Périodique (IUPAC) avec un composé de métal de transition choisi parmi l'un des Groupes 4 à 10 du Tableau Périodique (IUPAC) ou un composé actinide ou lanthanide pour former un produit réactionnel en présence d'un solvant, ce qui conduit à la formation d'un système biphasique liquide/liquide comprenant une phase de catalyseur et une phase de solvant,
(b) formation d'une émulsion comprenant une phase de catalyseur comprenant ledit agent et une phase de solvant, la phase de solvant représentant la phase continue et la phase de catalyseur formant la phase dispersée, et
(c) solidification de la phase dispersée.

**15.** Utilisation du catalyseur sous la forme de particules solides tel que défini dans l'une des revendications 1 à 12 pour la préparation d'un copolymère statistique de propylène.

**Figure 1:** Flowability was measured by letting 90 g of polymer powder flow through a funnel. The time it takes for the sample to flow through is a measurement of stickiness.

**Figure 2:**     Funnel for the flowability test

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03000754 A
- WO 03000757 A

- WO 2004029112 A
- WO 2007077027 A

**Non-patent literature cited in the description**

- *Quim. Nova,* 2004, vol. 27 (4), 601-614
- *Thermochimica Acta,* 1990, vol. 66, 53-68

- IR-Spektroskopie für Anwender. WILEY-VCH, 1997
- Validierung in der Analytik. WILEY-VCH, 1997